# EUROPÄISCHE PATENTSCHRIFT

(11) **EP 0 676 564 B1**
(45) Veröffentlichungstag und Bekanntmachung des Hinweises auf die Patenterteilung: **26.01.2000**
(21) Anmeldenummer: 95103170.7
(22) Anmeldetag: 06.03.1995
(51) Int. Cl.: F16H 59/00, F16H 61/00

(54) **Steuereinrichtung und Steuerverfahren für ein stufenloses Getriebe**
Device and method for the control of a continuously variable transmission
Dispositif et méthode de commande pour transmission à variation de vitesse infinie

(30) Priorität: 07.04.1994 DE 4411938
(43) Veröffentlichungstag der Anmeldung: 11.10.1995
(73) Patentinhaber: Dr.Ing.h.c. F. Porsche Aktiengesellschaft, 70435 Stuttgart (DE)
(72) Erfinder: Lardy, Patrick, D-71263 Weil der Stadt (DE); Seidel, Willi, D-71735 Eberdingen (DE); Petersmann, Joseph, D-71299 Wimsheim (DE)

(56) Entgegenhaltungen:
- EP-A- 0 238 310
- EP-A- 0 377 953
- EP-A- 0 531 552
- EP-A- 0 588 828
- EP-A- 0 634 591
- DE-A- 4 006 451
- DE-A- 4 010 104
- DE-C- 4 239 133

## Beschreibung

Die Erfindung betrifft eine Steuereinrichtung und ein Steuerverfahren für ein stufenloses Getriebe nach dem Oberbegriff des Patentanspruches 1.

In den bekannten gestuften Getrieben sind nur feste Übersetzungsprünge möglich. Für die Festlegung der Übersetzungssprünge ist es jedoch wesentlich, ob z.B. bergauf oder bergab, beladen oder unbeladen gefahren wird. So kann ein Übersetzungssprung vom dritten in den vierten Gang, der in der Ebene gut zu fahren ist, an entsprechender Steigung viel zu groß sein. Dies führt zu einer Situation, in der das das Fahrzeug im dritten Gang bis zur Höchstdrehzahl der Antriebsmaschine beschleunigen, im vierten Gang dann aber die erreichte Geschwindigkeit nicht mehr halten kann. Bei automatisch schaltenden gestuften Getrieben führt dies zu Wechselschaltungen (im angeführten Beispiel zwischen dem dritten und dem vierten Gang), die sich nur durch einen Eingriff mittels eines Wählhebels in die Getriebesteuerung vermeiden lassen, indem ein (im angeführten Beispiel der dritte Gang) fest gewählt wird.

Aus der DE-A1 41 20 540 ist es für stufenlose Getriebe bekannt, ein gestuftes Getriebe nachzubilden, indem Übersetzungen fest vorgegeben sind. Ferner ist es aus der DE-A1 42 39 133, zu der die EP-A-588 828 korrespondiert, bekannt, mit Hilfe eines stufenlosen Getriebes ebenfalls unter Vorgabe fester Übersetzungen einen Stufenautomaten nachzubilden. Auch hier treten die oben genannten Probleme auf.

Es ist Aufgabe der Erfindung, derartige Pendelschaltungen zu verhindern.

Diese Aufgabe wird mit den Merkmalen der unabhängigen Ansprüche gelöst. Dort ist vorgeschlagen, die Steuereinrichtung eines stufenlosen Getriebes um eine Erkennungseinrichtung für Fahrsituationen, in denen der Übersetzungssprung zu groß ist, zu erweitern und ferner eine Einrichtung zur Anpassung der voreingestellten Übersetzung vorzusehen. Die Erkennungseinrichtung aktiviert die Anpaßeinrichtung, sobald die oben beschriebene Fahrsituation erreicht ist, in der Pendelschaltungen auftreten können. Die Anpaßeinrichtung verändert dann eine voreingestellte Übersetzung so, daß mit dieser Übersetzung die Zugkraft dem aktuellen Fahrwiderstand angepasst ist, d.h. das Fahrzeug eine positive Längsbeschleunigung erreichen kann. Hiermit ist in vorteilhafter Weise erreicht, daß insbesondere bei einem automatischen Schaltgetriebe Pendelschaltungen vermieden werden. Sowohl bei manuell als auch bei automatisch schaltenden Getrieben ist erreicht, daß in besonderen Fahrsituationen eine Anpassung der Übersetzung an die herrschenden Betriebsbedingungen des Fahrzeuges erfolgt, ohne daß hierdurch die typischen Eigenschaften eines gestuften Getriebes verloren gingen.

In den Unteransprüchen sind vorteilhafte Aus- und Weiterbildungen der Erfindung beschrieben.

Die erste mögliche Ausbildung der Erkennungseinrichtung erkennt, wenn aufgrund mangelnder Zugkraft ein Wechsel von einer voreingestellten Übersetzung zu einer nächsthöheren voreingestellten Übersetzung erfolgt (entsprechend einer Rückschaltung bei einem Stufengetriebe). Als Indiz für mangelnde Zugkraft wird vorzugsweise geprüft, ob gleichzeitig eine Drosselklappenstellung größer als ein Grenzwert und eine Längsbeschleunigung kleiner als Null ist. Diese Art der Erkennung hat den Vorteil, nur dann einzugreifen, wenn der automatischen Steuerung oder dem Fahrerwunsch nicht mehr entsprochen werden kann.

Die zugehörige erste vorgeschlagene mögliche Ausbildung der Anpaßeinrichtung verändert, sobald eine obere Drehzahlgrenze der Antriebsmaschine erreicht ist, die Übersetzungso, daß die Getriebeeingangsdrehzahl konstant gehalten wird. Damit wird die Zugkraft durch Anpassung der Übersetzung dem aktuell herrschenden Fahrwiderstand angepaßt. Erreicht der Unterschied zwischen der aktuell eingestellten Übersetzung und der nächstgeringeren Übersetzung einen vorgegebenen Grenzwert, so wird eine Hochschaltung eingeleitet. Damit bleibt, trotz der Übersetzungsanpassung, der Charakter eines gestuften Getriebes erhalten.

Eine zweite mögliche Ausbildung der Anpaßeinrichtung verändert die Übersetzung in der beschriebenen Weise so lange, bis in der nächstniedrigeren Übersetzung (entsprechend einem nächsthöheren Gang bei einem Stufengetriebe) Zugkraftüberschuß vorliegen wird.

Eine dritte mögliche Ausbildung der Anpaßeinrichtung wird bereits vor dem Wechsel hin zur nächsthöheren Übersetzung wirksam. Die nächsthöhere Übersetzung wird gleich so bestimmt und eingestellt, daß hier noch ein vorgegebenes Drehzahlband der Antriebsmaschine verbleibt, bevor diese ihre Höchstdrehzahl erreicht. Die Größe dieses Drehzahlbandes bestimmt sich vorzugsweise als prozentualer Anteil des Drehzahlsprunges beim vorgesehenen Wechsel der Übersetzung und kann hier beispielsweise Werte zwischen 25% und 50% annehmen. Ebenfalls von Vorteil ist es, wenn das Drehzahlband so bestimmt wird, daß hier immer Zugkraftüberschuß herrscht. Mit dieser Ausbildung bleibt die Konstanz einer einmal eingestellten Übersetzung als typisches Merkmal eines Stufengetriebes erhalten.

Eine zweite mögliche Ausbildung der Erkennungseinrichtung beruht auf der Berechnung des Zugkraftüberschusses im nächsthöheren Gang, bevor dieser geschaltet wird. Eine derartige Berechnung kann in bekannter Weise z.B. derart erfolgen, daß aus einer Tabelle der bei der aktuellen Drosselklappenstellung und der sich im nächsthöheren Gang einstellenden Motordrehzahl Zugkraftüberschuß ermittelt wird; ist dieser Null oder negativ, so kann bereits vor einem Schaltvorgang die Übersetzung entsprechend angepasst werden.

Eine hierzu passende Anpaßeinrichtung ist so ausgebildet, daß ein Übersetzungswechsel zunächst unterdrückt wird. Erreicht hierbei die Antriebsmaschine eine obere Drehzahlgrenze, so wird die Übersetzung so verändert, daß die Getriebeeingangsdrehzahl konstant bleibt. Diese Übersetzungsanpassung wirdso lange vorgenommen, bis in der nächstniedrigeren Übersetzung (entsprechend dem nächsthöheren Gang beim Stufengetriebe) Zugkraftüberschuss vorhanden ist. Mit dieser Ausbildung wird die Übersetzungsanpassung auf das unbedingt notwendige Maß reduziert und der Charakter eines gestuften Getriebes bleibt ebenfalls erhalten.

Eine zweite passende Ausbildung der Anpaßeinrichtung wirkt nun nicht auf den aktuellen Gang ein, sondern die Übersetzungseinstellung in der nächstniedrigeren Übersetzung wird vor einem Wechsel dorthin so weit verändert, bis dort ein Zugkraftüberschuss vorhanden ist. Auch hier erfolgt eine Übersetzungsanpassung nur im unbedingt notwendigen Umfange und der Charakter eines gestuften Getriebes bleibt erhalten, weil an der aktuell gewählten Übersetzung keine Anpassung vorgenommen wird.

Die beschriebenen Erkennungseinrichtungen sind in der Regel als Teil einer mikroprozessorgesteuerten Steuereinrichtung ausgeführt. Selbstverständlich können die Erkennungseinrichtungen auch durch diskrete Vergleichseinrichtungen, wie etwa Differentialverstärker, realisiert werden, wobei eine erste Vergleichseinrichtung für die Drosselklappenstellung, eine zweite Vergleichseinrichtung für die Längsbeschleunigung und eine dritte Vergleichseinrichtung für die Motordrehzahl vorgesehen sind. Hierbei vergleicht die erste Vergleichseinrichtung die Drosselklappenstellung mit einem unteren Grenzwert, die zweite Vergleichseinrichtung die Längsbeschleunigung mit dem Höchstwert Null und die dritte Vergleichseinrichtung die Motordrehzahl mit einem Höchstwert und die Vergleichseinrichtungen geben jeweils bei zutreffendem Vergleich ein Signal ab.

Die vorbeschriebenen Wirkungen und Vorteile beziehen sich sowohl auf eine manuell geschaltete als auch auf eine automatisch geschaltete Nachbildung eines gestuften Getriebes mit Hilfe eines stufenlosen Getriebes. Sie gelten ferner in analoger Weise für das erfindungsgemäße Verfahren.

Die Erfindung ist nachstehend anhand des in den Zeichnungen beschriebenen Ausführungsbeispieles beschrieben. Es zeigen:
- Fig. 1: eine Übersicht über ein stufenloses Getriebe mit einer Steuerung
- Fig. 2: ein schematisches Blockschaltbild einer Übersetzungssteuerung,
- Fig. 3: eine Übersicht über in der Übersetzungssteuerung enthaltene Funktionen,
- Fig. 4: ein Diagramm der eingestellten Übersetzung während des Wirkens der erfindungsgemäßen Steuereinrichtung,
- Fig. 5: ein Diagramm des zeitlichen Verlaufes der Drehzahl einer Antriebsmaschine während des Wirkens der erfindungsemäßen Steuervorrichtung und
- Fig. 6: ein Ablaufdiagramm einer Erkennungs- und Anpaßfunktion.

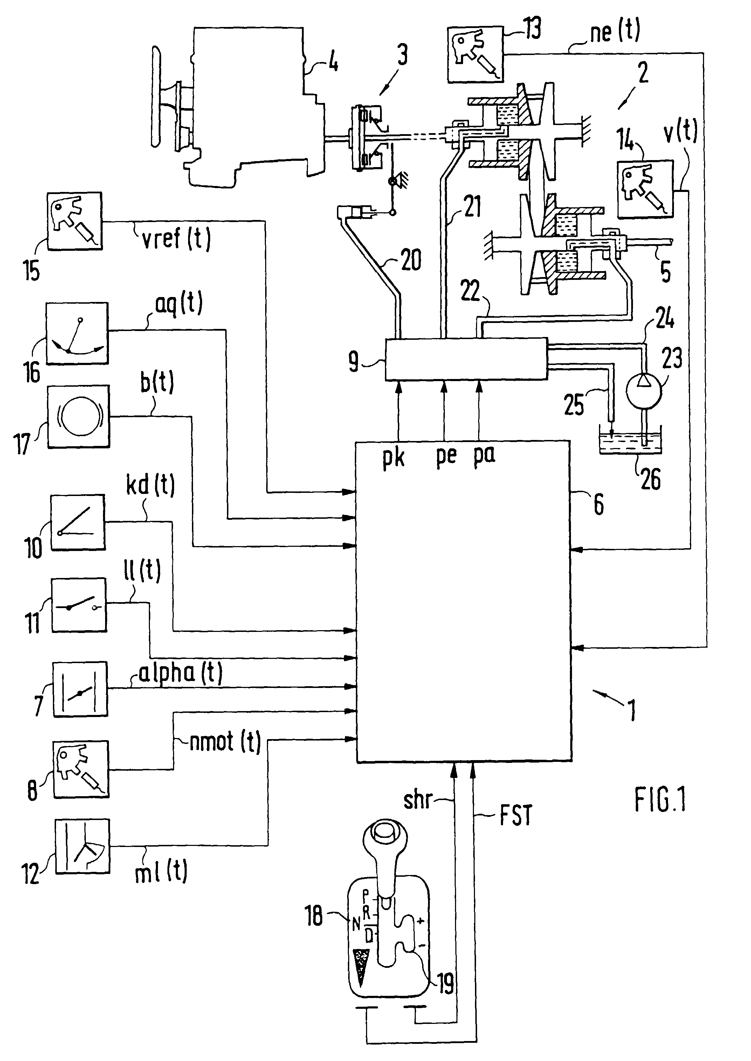

**Fig. 1** zeigt eine Übersicht über ein elektro-hydraulisch betätigten stufenlosen Getriebes 2 mit einer Steuerung 1 am Beispiel eines Umschlingungsgetriebes. Das stufenlose Getriebe 2 wird über eine steuerbare Anfahrkupplung 3 von einer Brennkraftmaschine 4 angetrieben. Eine Abtriebswelle 5 des stufenlosen Getriebes 2 ist mit einem nicht gezeigten Radantrieb eines Kraftfahrzeugs verbunden.

Größen oder Funktionen, die sich mit der Zeit t ändern, sind nachfolgend als Funktionen f(t) der Zeit t dargestellt.

Ein Steuergerät 6 steuert wenigstens in Abhängigkeit von der Drosselklappenstellung alpha(t) eines Drosselklappenwinkelgebers 7 und einer Motordrehzahl nmot(t) eines Motordrehzahlgebers 8 der Brennkraftmaschine 4 einen Hydraulik-Ventilblock 9 an. Zur Steuerung des stufenlosen Getriebes 2 und der Anfahrkupplung 3 erhält das Steuergerät 6 als weitere Eingangsgrößen ein Kick-down-Signal kd(t) eines Kick-down-Schalters 10, ein Leerlaufsignal ll(t) eines Leerlaufschalters 11, eine Luftmenge bzw. Luftmasse ml(t) eines Luftmengen- bzw. Luftmassengebers 12 der Brennkraftmaschine 4 sowie eine Getriebeeingangsdrehzahl ne(t) eines Getriebeeingangsdrehzahlgebers 13 und eine Fahrgeschwindigkeit v(t) eines Fahrgeschwindigkeitgebers 14. Die Getriebeeingangsdrehzahl ne(t) entspricht bei geschlossener Anfahrkupplung der Motordrehzahl nmot(t) und kann dann an deren Stelle verwendet werden. Zusätzlich wird vom Steuergerät 6 eine Geschwindigkeit vref(t) eines Referenzgeschwindigkeitgebers 15 an einer nicht angetriebenen Fahrzeugachse, eine Querbeschleunigung aq(t) eines Querbeschleunigungsgebers 16 und ein Bremssignal b(t) eines Bremssignalgebers 17 erfasst und verarbeitet.

Schließlich ist die Steuerung üblicherweise vom Fahrzeugführer über eine Wähleinrichtung 18 zur Vorwahl von Fahrstufen P (Parksperre), R (Rückwärtsgangstufe), N (Leergangsstufe) und D (selbstätige Einstellung der Übersetzung des stufenlosen Getriebes) beeinflußbar; ferner ist ein Einstellbereich der Wähleinrichtung 18 zur direkten Vorgabe der Übersetzung vorgesehen.

Die Wähleinrichtung 18 kann aus der Fahrstufe D in eine zweite Schaltgasse 19 bewegt werden, in der die Wähleinrichtung 18 ausgehend von einer mittigen Ruheposition als Wippschalter arbeitet und der Fahrzeugführer die Übersetzung im Sinne einer Hochschaltung oder einer Rückschaltung beeinflussen kann. Die Wähleinrichtung 18 gibt ein Fahrstufensignal FST und ein Schaltanforderungssignal shr für eine Hochschaltung oder eine Rückschaltung ab.
Hier und im folgenden steht der Begriff "Hochschalten" oder "Verringern der Übersetzung" für eine Übersetzungsänderung, die bei gleichbleibender Eingangsdrehzahl die Ausgangsdrehzahl des Getriebes erhöht, entsprechend einer Hochschaltung bei einem Stufengetriebe. Umgekehrt stehen die Begriffe "Rückschalten" und "Erhöhen der Übersetzung" für eine Übersetzungsänderung im Sinne einer Verringerung der Ausgangsdrehzahl des Getriebes bei gleichbleibender Eingangsdrehzahl, entsprechend einer Rückschaltung bei einem Stufengetriebe.

In Abhängigkeit von den genannten Größen steuert das Steuergerät 6 über einen Signalausgang pk und den Ventilblock 9 den Hydraulikdruck in der Anfahrkupplung 3 sowie über Signalausgänge pe und pa und den Hydraulikventilblock 9 eine Ist-Übersetzung ue zwischen der Getriebeeingangsdrehzahl ne(t) und der Getriebeausgangsdrehzahl (Fahrgeschwindigkeit) v(t) an. Der Hydraulikventilblock 9 verbindet hierzu entsprechende Steuerleitungen 20, 21 und 22 der Anfahrkupplung 3 und des stufenlosen Getriebes 2 mit einer an eine Pumpe 23 angeschlossenen Druckleitung 24 oder einer Rücklaufleitung 25 zu einem Vorratsbehälter 26 für Hydraulikflüssigkeit.

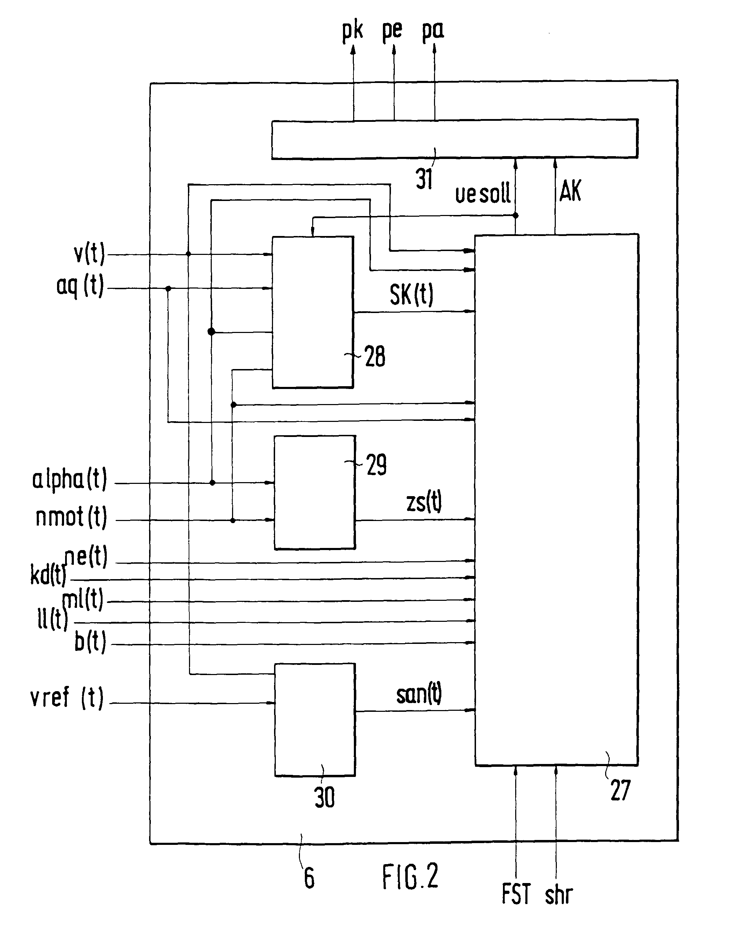

Das Steuergerät 6 umfaßt wie in **Fig. 2** dargestellt eine Übersetzungssteuerung 27, die mit einer Fahraktivitätsermittlungfunktion 28, einer Zug-Schub-Ermittlungsfunktion 29, einer Antriebsschlupfermittlungsfunktion 30 und einer Stellfunktion 31 verbunden ist.

Die Fahraktivitätsermittlungsfunktion 28 bestimmt eine den Fahrstil des Fahrers oder dessen verkehrssituationsbedingtes Handeln im Bezug auf die Steuerung des Kraftfahrzeuges bewertenden Größe Fahraktivität SK(t), vorzugsweise nach einem in der DE-A1 39 22 051 beschriebenen Verfahren.

Die Zug-Schub-Ermittlungsfunktion 29 gibt in Abhängigkeit von der Drosselklappenstellung alpha(t) und der Motordrehzahl nmot(t) ein Signal für Zug- oder Schubbetrieb des Fahrzeuges Zug/Schub zs(t) ab und die Antriebsschlupfermittlungsfunktion 30 ermittelt aus der Differenz von Fahrgeschwindigkeit v(t) und Geschwindigkeit vref(t) einen den Schlupf der angetriebenen Räder repräsentierenden Antriebsschlupf san(t).

Aus diesen Größen, dem Fahrstufensignal FST, dem Schaltanforderungssignal shr, der Drosselklappenstellung alpha(t), dem Kick-down-Signal kd(t), dem Leerlaufsignal ll(t), der Luftmasse ml(t), der Getriebeeingangsdrehzahl ne(t), der Fahrgeschwindigkeit v(t), der Querbeschleunigung aq(t), dem Bremssignal b(t) und der Getriebeausgangsdrehzahl ne(t) ermittelt die Übersetzungssteuerung 27 eine Soll-Übersetzung uesoll sowie ein Signal Anfahrkupplung auf/zu AK, die an die Stellfunktion 31 weitergegeben werden.

Die Stellfunktion 31 steuert mittels der Signalausgänge pe und pa die Einstellung der Ist-Übersetzung ue des Getriebes 2, wobei die Soll-Übersetzung uesoll mit geringstmöglicher Verzugszeit, jedoch ohne merkliches Überschwingen eingestellt wird. Darüber hinaus wird die Anfahrkupplung nach Maßgabe des Signales Anfahrkupplung auf/zu AK von der Stellfunktion 31 über den Signalausgang pk gesteuert.

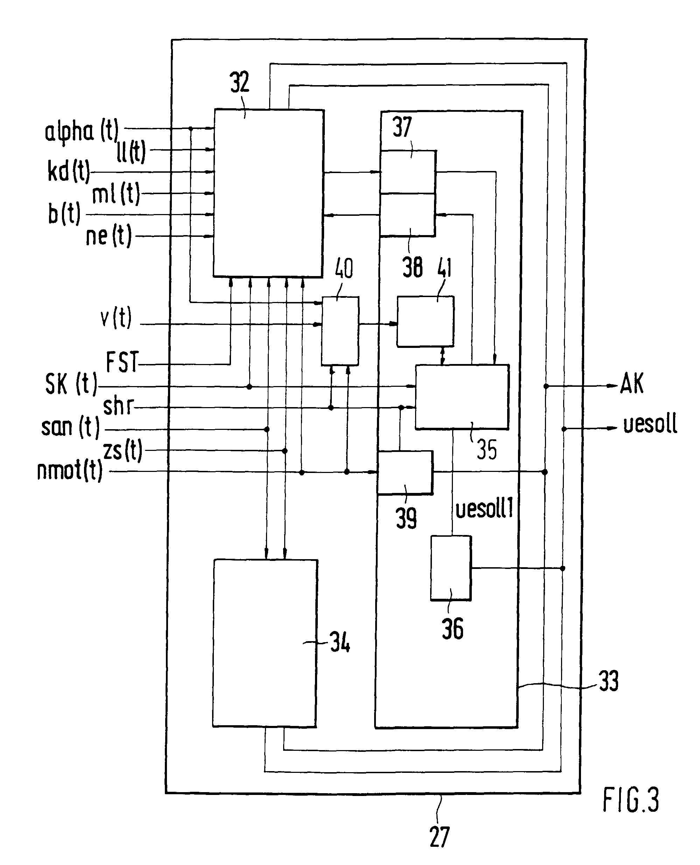

In **Fig. 3** ist eine Übersicht über die in der Übersetzungssteuerung 27 enthaltenen Funktionen dargestellt. Für die erste selbsttätig die Übersetzung wählende Betriebsart ist eine Automatikfunktion 32 mit den Eingangsgrößen Zug/Schub zs(t), Antriebsschlupf san(t), Fahrstufensignal FST, Fahraktivität SK(t), Drosselklappenstellung alpha(t), Motordrehzahl nmot(t), Leerlaufsignal ll(t), Kick-Down-Signal kd(t), Luftmassensignal ml(t), Bremssignal b(t) und Getriebeeingangsdrehzahl ne(t) vorgesehen.

Für die zweite vom Fahrer beeinflußte Betriebsart gibt es eine Manuellfunktion 33 mit den Eingangsgrößen Schaltanforderungssignal shr, Fahraktivität SK(t) und Motordrehzahl nmot(t). Weiterhin umfaßt die Übersetzungssteuerung 27 eine Fahrsicherheitsfunktion 34 mit den Eingangsgrößen Zug/Schub zs(t) und Antriebsschlupf san(t). Die genannten Funktionen erzeugen jeweils die Ausgangssignale Soll-Übersetzung uesoll und Anfahrkupplung auf/zu AK.

Innerhalb der Manuellfunktion 33 ermittelt eine Grundfunktion 35 aus der Fahraktivität SK(t) und dem Schaltanforderungssignal shr ein Signal einer ersten Soll-Übersetzung uesoll1. Der Grundfunktion 35 nachgeschaltet ist eine Verschleißminderungsfunktion 36, die aus dem Signal der ersten Soll-Übersetzung uesoll1 ein Signal einer Soll-Übersetzung uesoll ableitet. An die Grundfunktion 35 sind eine erste Übergangsfunktion 37 und eine zweite Übergangsfunktion 38 angegliedert, die beide jeweils mit der Automatikfunktion 32 verbunden sind. Parallel zur Grundfunktion 35 ist eine Sicherheitsfunktion 39 mit der Motordrehzahl nmot(t) beaufschlagt und gibt das Schaltanforderungssignal shr sowie das Signal Anfahrkupplung auf/zu AK ab.

Die Grundfunktion 35 enthält eine nicht gezeigte Tabelle, in der voreingestellte Soll-Übersetzungen uesoll1(i) abgelegt sind. Da jede dieser voreingestellten Sollübersetzungen uesoll1(i) bei der Nachbildung eines Stufengetriebes einem Gang dieses Stufengetriebes entspricht, sind so viele voreingestellten Sollübersetzungen uesoll1(i) vorgesehen, wie Gänge eines Stufengetriebes nachgebildet werden sollen. Die voreingestellten Sollübersetzungen uesoll1(i) können daher auch als Gänge bezeichnet werden.

Im dargestellten Beispiel ist ein 5gängiges Stufengetriebe nachgebildet, so daß für Vorwärtsfahrt die voreingestellten Sollübersetzungen uesoll1(1), uesoll1(2), uesoll1(3), uesoll1(4) und uesoll1(5) in der Tabelle abgelegt sind. Die Bezeichnung der voreingestellten Sollübersetzungen erfolgt nach dem Schema uesoll1(i), wobei i für den entsprechenden Gang des Stufengetriebes steht. uesoll1(3) steht also für die voreingestellten Sollübersetzungen, die dem 3. Gang des Stufengetriebes entspricht. Während die Gänge von uesoll1(1) nach uesoll1(5) 'höher' werden, verringert sich in dieser Richtung der Wert der voreingestellten Sollübersetzung: die voreingestellte Sollübersetzung ist bei uesoll1(1) am höchsten und bei uesoll1(5) am niedrigsten.

Schließlich ist eine Anpaßeinrichtung 41 für die Soll-Übersetzung uesoll vorgesehen, die bei durch eine Erkennungseinrichtung 40 erkannten Fahrsituationen mit zu großem Übersetzungssprung die in der Grundfunktion 35 voreingestellt abgelegten Soll-Übersetzungen uesoll1(i) verändert.

Die erste Übergangsfunktion 37 wird bei einem Wechsel von der Automatikfunktion 32 zur Manuellfunktion 33, d.h. einem Wechsel aus der ersten selbsttätig die Übersetzung wählenden zur zweiten vom Fahrer beeinflußten Betriebsart, aufgerufen und regelt den Übergang. Umgekehrt regelt die zweite Übergangsfunktion den Übergang von der Manuellfunktion 33 zur Automatikfunktion 32.

Die Erkennungseinrichtung 40 erkennt aus ihren Eingangsgrößen Fahrgeschwindigkeit v(t), Drosselklappenstellung alpha(t), Motordrehzahl nmot(t) und Schaltanforderungssignal shr, wenn eine Fahrsituation vorliegt, in der bei der aktuellen Fahrgeschwindigkeit v(t) der Sprung zu einer nächstgeringeren Soll-Übersetzung uesoll1(i+1) zu groß ist. Anders ausgedrückt: Ist in diesem Fall in der aktuellen Soll-Übersetzung uesoll1 die Zugkraftausnutzung gering, während in der nächstgeringeren Soll-Übersetzung uesoll1(i+1) die aktuelle Geschwindigkeit v(t) mangels Zugkraft nicht gehalten werden kann. Um die gewünschte Fahrsituation zu erkennen erfaßt die Erkennungseinrichtung 40 bei einem Schaltanforderungssignal shr "Rückschalten" die unmittelbar vor der Rückschaltung herrschenden Werte von Fahrgeschwindigkeit v(t) und Drosselklappenstellung alpha(t) und prüft die folgenden Bedingungen:
- Liegt die Drosselklappenstellung alpha(t) oberhalb eines Grenzwertes g_alpha von ca. 50 % ?
- Ist eine aus der Fahrgeschwindigkeit v(t) gebildete (oder extern bereits erfaßte oder extern gebildete) Längsbeschleunigung al(t) < 0?
Wenn eine solche Fahrsituation erkannt ist, aktiviert die Erkennungseinrichtung 40 die Anpaßeinrichtung 41.

Die Anpaßeinrichtung 41 überwacht die Motordrehzahl nmot(t) dahingehend, ob diese eine um eine minimale Differenzdrehzahl d_nmot_min unter einer Maximaldrehzahl nmax der Brennkraftmaschine 4 liegende Grenze überschreitet. Ist auch diese Bedingung erfüllt, so verändert die Anpaßeinrichtung 41 die aktuelle Soll-Übersetzung uesoll1(i) durch Übergabe einer veränderten Soll-Übersetzung uesoll2 an die Grundfunktion 35 so, daß die Getriebeeingangsdrehzahl ne(t) konstant auf dem aktuellen Wert gehalten wird. Wird hierbei die veränderte Soll-Übersetzung uesoll2 in etwa so groß wie die nächstgeringere Soll-Übersetzung uesoll1(i+1), so wird in der Grundfunktion 35 ein Wechsel zur nächstgeringeren Soll-Übersetzung uesoll1(i+1) angefordert.

Sobald eine der drei vorgenannten Bedingungen für die Drosselklappenstellung alpha(t), die Längsbeschleunigung al(t) und die Motordrehzahl nmot(t) verletzt wird, wird für den Fall, daß die Anpasseinrichtung 41 die aktuelle Soll-Übersetzung uesoll1(i) noch nicht verändert hat, die Überprüfung der Fahrsituation durch die Erkennungseinrichtung 40 oder die Überwachung der Motordrehzahl nmot(t) durch die Anpaßeinrichtung 41 abgebrochen und für den Fall, daß die Anpasseinrichtung 41 bereits aktiviert wurde, diese wieder deaktiviert und die nunmehr eingestellte veränderte Soll-Übersetzung uesoll2 beibehalten. Ein Schaltanforderungssignal shr bricht in jedem Fall die Arbeit sowohl der Erkennungseinrichtung 40 als auch der Anpasseinrichtung 41 ab; bei einem Schaltanforderungssignal shr "Rückschalten" erfolgt unter der Bedingung, daß bereits eine veränderte Sollübersetzung uesoll2 eingestellt ist, ein Übergang zur ursprünglich gewählten Sollübersetzung uesoll1(i).

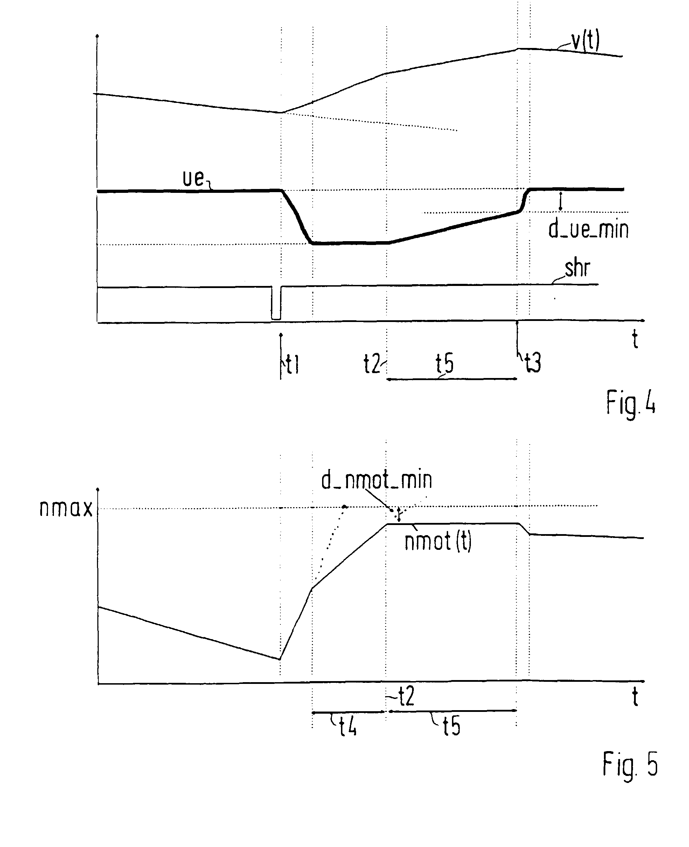

**Fig. 4** zeigt ein Diagramm der Ist-Übersetzung ue während der Funktion der Anpasseinrichtung 41 und **Fig. 5** den gleichzeitigen Verlauf der Motordrehzahl nmot(t). Deutlich zu erkennen ist, wie vor dem Zeitpunkt t1 die Fahrgeschwindigkeit v(t) abfällt, obwohl, wie nicht gezeigt, die Drosselklappenstellung alpha(t) groß ist, d.h. oberhalb des Grenzwertes g_alpha von ca. 50 % liegt. Zum Zeitpunkt t1 wird ein Anforderungssignal shr "Rückschalten" abgegeben. Hier erkennt die Erkennungseinrichtung 40 die vordefinierte Fahrsituation und gibt die Anpasswerteinrichtung 41 frei. Die eingestellte Ist-Übersetzung ue wird nach dem Anforderungssignal shr "Rückschalten" vom alten Wert uesoll1(5) auf den neuen Wert uesoll1(4) erhöht und nachfolgend steigen Fahrgeschwindigkeit v(t) und Motordrehzahl nmot(t) an. Zum Zeitpunkt t2 erreicht die Motordrehzahl nmot einen Wert, der um die minimale Differenzdrehzahl d_nmot_min unter der Maximaldrehzahl nmax der Brennkraftmaschine 4 liegt. Ab dem Zeitpunkt t2 wird die Anpasswerteinrichtung 41 wirksam, die nachfolgend die Getriebeeingangsdrehzahl ne(t) konstant hält. Hierbei wird die Übersetzung ue immer weiter nach Maßgabe des geänderten Übersetzungs-Sollwertes uesoll2 erhöht. Zum Zeitpunkt t3 erreicht die Übersetzung ue einen Wert, der um eine minimale Übersetzungsdifferenz d_ue_min unterhalb der Soll-Übersetzung uesoll1(i+1) des nächsthöheren Ganges liegt und leitet selbsttätig eine Hochschaltung ein. Nach dem Zeitpunkt t3 ist die Anpasseinrichtung 41 nicht mehr aktiv, da mit der Hochschaltung die von der Erkennungseinrichtung 40 erkannte Fahrsituation nicht mehr vorliegt.

In **Fig. 4** und in **Fig. 5** ist mit t4 der Bereich bezeichnet, in dem die Ist-Übersetzung ue konstant bleibt und t5 kennzeichnet den Bereich, in dem durch die Wirkung der Anpasseinrichtung 41 die Getriebeeingangsdrehzahl ne(t) konstant gehalten wird.

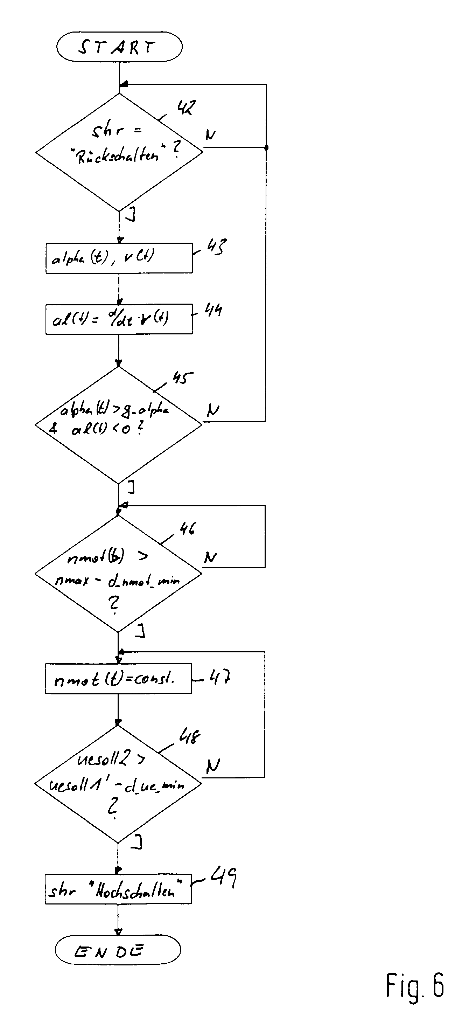

In **Fig. 6** ist in einem Ablaufdiagramm dargestellt, wie die soeben beschriebene Erkennungseinrichtung 40 und der Anpasseinrichtung 41 als Funktion mit Hilfe einer programmierbaren Steuereinrichtung gebildet wird. Hierbei sind die bisher getrennt dargestellten Funktionen der Erkennungseinrichtung 40 und der Anpasseinrichtung 41 gemeinsam dargestellt.

Zunächst wird in Schritt 42 auf ein Signalanforderungssignal shr "Rückschalten" gewartet. Erst nachdem eine Rückschaltung erkannt wurde, geht es mit Schritt 43 weiter, indem die Drosselklappenstellung alpha(t) und die Fahrgeschwindigkeit v(t) unmittelbar vor der Schaltung ermittelt werden. In Schritt 44 wird aus der Fahrgeschwindigkeit v(t) die Längsbeschleunigung al(t) gebildet und in Schritt 45 anschließend geprüft, ob sowohl die Längsbeschleunigung al(t) kleiner Null als auch die Drosselklappenstellung alpha(t) größer als ein Grenzwert g_alpha ist. Sind diese Bedingungen nicht erfüllt, so erfolgt ein Rückschritt vor Schritt 42. Sind die Bedingungen hingegen erfüllt, so geht es mit Schritt 46 weiter, indem gewartet wird, bis die Motordrehzahl nmot(t) einen Wert überschreitet, der sich aus der Maximaldrehzahl nmax abzüglich der minimalen Differenzdrehzahl d_nmot_min ergibt. Ist dies der Fall, so wird in Schritt 47 die Motordrehzahl nmot auf dem gerade vorliegenden Wert so lange konstant gehalten, bis in der Überprüfung in Schritt 48 erkannt wird, daß die eingestellte Ist-Übersetzung ue näher als ein minimaler Differenzwert d_ue_min an der Soll-Übersetzung im nächsthöheren Gang uesoll1(i+1) liegt. Ist dies der Fall, so wird in Schritt 49 ein Schaltanforderungssignal shr "Hochschalten" abgegeben und das Programm beendet.

Das Programm wird zu jedem Zeitpunkt nach Schritt 42 beendet, wenn nach Schritt 42 ein weiteres Schaltanforderungssignal shr erkannt wird. Im Diagramm nach Fig. 6 entsprechen die Schritte 42 bis 46 der Erkennungseinrichtung 40 und die Schritte 47 bis 49 der Anpasseinrichtung 41.

Die Übersetzungssteuerung 27 wirkt wie folgt: Vor Inbetriebnahme der Übersetzungssteuerung 27 werden Gruppen von voreingestellten Übersetzungen uesoll1(1..5) in einem nicht dargestellten Speicher abgelegt. Während des Betriebes werden dann entweder durch die Automatikfunktion 32 oder durch die Manuellfunktion 33 die voreingestellten Übersetzungen uesoll1(i) ausgewählt und durch die Stellfunktion 31 am Getriebe 2 eingestellt. Erkennt nun die Erkennungseinrichtung 40, daß vor der Anforderung eines Rückschaltung trotz hoher Drosselklappenstellung alpha(t) die Fahrgeschwindigkeit v(t) nicht gehalten werden konnte und zusätzlich nach der Rückschaltung die Brennkraftmaschine 4 in die Nähe ihrer Höchstdrehzahl nmax gerät, so aktiviert sie die Anpasseinrichtung 41, die durch Veränderung der aktuellen Soll-Übersetzung uesoll1(4) dafür sorgt, daß die Motordrehzahl nmot(t) konstant gehalten wird. Diese Anpassung erfolgt so lange, bis entweder die aktuell eingestellte Ist-Übersetzung ue bzw. die geänderte Soll-Übersetzung uesoll2 so weit an die nächstgerigere Übersetzung uesoll1(5) angenähert wurde, daß eine selbsttätige Hochschaltung durchgeführt wird, um den gestuften Charakter zu erhalten oder die Drosselklappenstellung alpha(t) unter der Grenzwert g_alpha fällt und nachfolgend die nun eingestellte Ist-Übersetzung ue bzw. die geänderte Soll-Übersetzung uesoll2 beibehalten wird. Tritt nun ein Schaltanforderungssignal shr "Rückschalten" auf, so wird wieder die Soll-Übersetzung uesoll1(4) eingestellt, die vor dem Eingriff durch die Anpaßeinrichtung 41 gewählt war.

Wie bereits eingangs erwähnt sind die Erkennungseinrichtung 40 und die Anpaßeinrichtung 41 sowie die zugehörigen Verfahrensschritte zur Darstellung dieser Einrichtungen in einer programmierbaren Steuereinrichtung sowohl bei automatische geschalteten als auch bei vom Fahrer geschalteten Getrieben anwendbar. In einem weiteren, hier nicht näher dargestellten Ausführungsbeispiel ist es demzufolge selbstverständlich vorgesehen, daß die Automatikfunktion 32 einen Stufenautomaten nachbildet und dann innerhalb der Automatikfunktion 35 in analoger Weise eine Erkennungseinrichtung 40 und eine Anpaßeinrichtung 41 vorgesehen sind.

### Liste der Bezugszeichen

- 1: Steuerung
- 2: stufenloses Getriebe
- 3: steuerbare Anfahrkupplung
- 4: Brennkraftmaschine
- 5: Abtriebswelle
- 6: Steuergerät
- 7: Drosselklappenwinkelgeber
- 8: Motordrehzahlgeber
- 9: Hydraulik-Ventilblock
- 10: Kick-down-Schalters
- 11: Leerlaufschalters
- 12: Luftmengen- bzw. Luftmassengeber
- 13: Getriebeeingangsdrehzahlgeber
- 14: Fahrgeschwindigkeitgeber
- 15: Referenzgeschwindigkeitgeber
- 16: Querbeschleunigungsgeber
- 17: Bremssignalgeber
- 18: Wähleinrichtung
- 19: zweite Schaltgasse
- 20: Steuerleitung
- 21: Steuerleitung
- 22: Steuerleitung
- 23: Pumpe
- 24: Druckleitung
- 25: Rücklaufleitung
- 26: Vorratsbehälter
- 27: Übersetzungssteuerung
- 28: Fahraktivitätsermittlungfunktion
- 29: Zug-Schub-Ermittlungsfunktion
- 30: Antriebsschlupfermittlungsfunktion
- 31: Stellfunktion
- 32: Automatikfunktion
- 33: Manuellfunktion
- 34: Fahrsicherheitsfunktion
- 35: Grundfunktion
- 36: Verschleißminderungsfunktion
- 37: erste Übergangsfunktion
- 38: zweite Übergangsfunktion
- 39: Sicherheitsfunktion
- 40: Erkennungsfunktion
- 41: Anpaßfunktion
- AK: Signal Anfahrkupplung auf/zu
- alpha(t): Drosselklappenstellung
- aq(t): Querbeschleunigung
- b(t): Bremssignal
- D: Fahrstufe "selbsttätige Übersetzungseinstellung"
- d_nmot_min: minimale Differenzdrehzahl
- d_ue_min: minimale Übersetzungsdifferenz
- FST: Fahrstufensignal
- g_alpha: Grenzwert für Drosselklappenstellung
- kd(t): Kick-down-Signal
- II(t): Leerlaufsignal
- ml(t): Luftmenge bzw. Luftmasse
- N: Fahrstufe "Leergangstufe"
- na(t): Getriebeausgangsdrehzahl
- ne(t): Getriebeeingangsdrehzahl
- nmax: maximale Motordrehzahl
- nmot(t): Motordrehzahl
- P: Fahrstufe "Parksperre"
- pa: Signalausgang
- pe: Signalausgang
- pk: Signalausgang
- R: Fahrstufe "Rückwärtsgangstufe"
- san(t): Antriebsschlupf
- shr: Schaltanforderungssignal
- SK(t): Fahraktivität
- t1..t3: Zeitpunkte
- t4..t5: Zeiträume
- ue: Ist-Übersetzung
- uesoll: Soll-Übersetzung
- uesoll1(i): voreingestellte Soll-Übersetzungen
- uesoll2: 2 Veränderte Soll-Übersetzung
- v(t): Fahrgeschwindigkeit
- vref(t): Geschwindigkeit
- zs(t): Zug/Schub

## Patentansprüche

1. Steuereinrichtung (6) für ein stufenloses Getriebes (2) eines insbesondere mit einer Brennkraftmaschine (4) angetriebenen Kraftfahrzeuges, wobei die Steuereinrichtung (6) mit einer Wähleinrichtung (18) versehen ist und die Steuereinrichtung (6) ein gestuftes Getriebe nachbildet, indem die Steuereinrichtung (6) aus einer Gruppe von voreingestellten Übersetzungen (uesoll1(1..5)) ausgewählte Übersetzungen (uesoll1(i)) im Getriebe einstellt, **dadurch gekennzeichnet**, daß die Steuereinrichtung
- eine Erkennungseinrichtung (40) für Fahrsituationen, in denen der Übersetzungssprung für einen herrschenden Fahrwiderstand zu groß ist, und
- eine Anpaßeinrichtung (41) für die ausgewählte Übersetzung (uesoll1(i)) oder eine benachbarte Übersetzung (uesoll1(i+1)) aufweist, die eine ausgewählte Übersetzung so verändert, daß die Zugkraft dem herrschenden Fahrwiderstand angepaßt ist, und
- die Erkennungseinrichtung (40) die Anpaßeinrichtung (41) aktiviert.

2. Steuereinrichtung nach Anspruch 1, **dadurch gekennzeichnet**, daß die Erkennungseinrichtung (40) anspricht, wenn vor einem Wechsel von einer voreingestellten Übersetzung (uesoll1(5)) zu einer nächsthöheren voreingestellten Übersetzung (uesoll1(4)) eine Drosselklappenstellung (alpha(t)) größer als ein Grenzwert (g_alpha) und eine Längsbeschleunigung (al(t)) kleiner als Null ist.

3. Steuereinrichtung nach Anspruch 1 oder 2, **dadurch gekennzeichnet**, daß die Anpaßeinrichtung (41) eine veränderte Übersetzung (uesoll2) so einstellt, daß eine Getriebeeingangsdrehzahl (ne(t)) konstant bleibt, wenn eine Motordrehzahl (nmot(t)) größer als ein Grenzwert (nmax - d_nmot_min) ist.

4. Steuereinrichtung nach Anspruch 3, **dadurch gekennzeichnet**, daß ein selbsttätiger Wechsel zur nächstniedrigeren voreingestellten Übersetzung (uesoll1(5)) erfolgt, sobald eine vorgegebene Drehzahldifferenz (d_nmot_min) zur Motordrehzahl (nmot(t)) in der nächstniedrigeren voreingestellten Übersetzung (uesoll1(5)) unterschritten wird.

5. Steuereinrichtung nach Anspruch 3, **dadurch gekennzeichnet**, daß ein selbsttätiger Wechsel zur nächstniedrigeren voreingestellten Übersetzung (uesoll1(5)) erfolgt, sobald dort bei der aktuell vorliegenden Drosselklappenstellung (alpha(t) und Motordrehzahl (nmot(t)) Zugkraftüberschuß herrscht.

6. Steuereinrichtung nach Anspruch 1 oder 2, **dadurch gekennzeichnet**, daß die Anpaßeinrichtung (41) die bei einem Wechsel von einer voreingestellten Übersetzung (uesoll1(5)) zu einer nächsthöheren voreingestellten Übersetzung (uesoll1(4)) einzustellende nächsthöhere voreingestellte Übersetzung (uesoll1(4)) durch eine veränderte Übersetzung (uesoll2) ersetzt, die so gewählt ist, daß ein Betrieb der Brennkraftmaschine (4) über ein vorgegebenes Motordrehzahlband (nmot(t)) möglich ist.

7. Steuereinrichtung nach Anspruch 6, **dadurch gekennzeichnet**, daß die veränderte Übersetzung (uesoll2) so gewählt ist, daß ein Betrieb der Brennkraftmaschine (4) über ein vorgegebenes Motordrehzahlband (nmot(t)) unter Zugkraftüberschuß möglich ist.

8. Steuereinrichtung nach Anspruch 1, **dadurch gekennzeichnet**, daß die Erkennungseinrichtung (40) anspricht, wenn in der nächstniedrigeren voreingestellten Übersetzung (uesoll1(5)) bei der aktuell vorliegenden Drosselklappenstellung (alpha(t)) und Motordrehzahl (nmot(t)) kein Zugkraftüberschuß herrscht.

9. Steuereinrichtung nach Anspruch 1 oder 8, **dadurch gekennzeichnet**, daß die Anpaßeinrichtung (41) einen Wechsel zur nächstniedrigeren voreingestellten Übersetzung (uesoll1(5)) unterdrückt, bis dort bei der aktuell vorliegenden Drosselklappenstellung (alpha(t) und Motordrehzahl (nmot(t)) Zugkraftüberschuß herrscht, und während der Unterdrückung dieses Wechsels eine veränderte Übersetzung (uesoll2) so einstellt, daß eine Getriebeeingangsdrehzahl (ne(t)) konstant bleibt, wenn eine Motordrehzahl (nmot(t)) größer als ein Grenzwert (nmax - d_nmot_min) ist.

10. Steuereinrichtung nach Anspruch 1 oder 8, **dadurch gekennzeichnet**, daß die Anpaßeinrichtung (41) die nächstniedrigere voreingestellte Übersetzung (uesoll1(5))durch eine veränderte Übersetzung (uesoll2) ersetzt, die so gewählt ist, daß dort bei der aktuell vorliegenden Drosselklappenstellung (alpha(t) und Motordrehzahl (nmot(t)) Zugkraftüberschuß herrscht.

11. Steuereinrichtung nach einem der vorhergehenden Ansprüche, **dadurch gekennzeichnet**, daß die Anpaßeinrichtung (41) nach ihrer Deaktivierung die zuletzt eingestellte veränderte Übersetzung (uesoll2) bis zur nächsten Schaltung beibehält, wobei bei einer Rückschaltung die ursprünglich eingestellte Übersetzung (uesoll1(i)) wieder eingestellt wird.

12. Steuerverfahren für ein stufenloses Getriebe (2) eines insbesondere mit einer Brennkraftmaschine (4) angetriebenen Kraftfahrzeuges, wobei eine das Steuerverfahren ausführende Steuereinrichtung (6) mit einer Wähleinrichtung (18) versehen ist und die Steuereinrichtung (6) ein gestuftes Getriebe nachbildet, indem die Steuereinrichtung (6) aus einer Gruppe von voreingestellten Übersetzungen (uesoll1(1..5)) ausgewählte Übersetzungen (uesoll1(i)) im Getriebe einstellt, **gekennzeichnet** durch folgende Schritte:
- Erkennen einer Fahrsituation (45-47), in der der Übersetzungssprung für einen herrschenden Fahrwiderstand zu groß ist, und nachfolgend
- Anpassen einer ausgewählten Übersetzung (uesoll1(4)) so, daß die Zugkraft in dieser ausgewählten oder der hierzu benachbarten Übersetzung (uesoll1(4) oder uesoll1(5)) dem herrschenden Fahrwiderstand entspricht.

13. Steuerverfahren nach Anspruch 12, **gekennzeichnet** durch folgende Schritte für das Erkennen einer Fahrsituation, in der der Übersetzungssprung für einen herrschenden Fahrwiderstand zu groß ist:
- Abwarten Schaltanforderungssignal (shr) "Rückschalten" (42),
- Ermitteln der Drosselklappenstellung alpha(t) und der Längsbeschleunigung al(t) unmittelbar vor der Rückschaltung (43,44),
- Prüfen ob sowohl die Längsbeschleunigung (al(t)) kleiner Null als auch die Drosselklappenstellung (alpha(t)) größer als ein Grenzwert (g_alpha) ist (45),
- wenn ja, dann weiter mit dem Anpassen der ausgewählten Übersetzung.,

14. Steuerverfahren nach einem der Ansprüche 12 oder 13, **gekennzeichnet** durch folgenden Schritt für das Anpassen der ausgewählten Übersetzung (uesoll1(4)):
- Abwarten bis die Motordrehzahl (nmot(t)) einen Grenzwert (nmax - d_nmot_min) überschreitet (46) und nachfolgend
- Einstellen einer veränderten Übersetzung (uesoll2) so, daß die Getriebeeingangsdrehzahl (ne(t)) konstant gehalten ist (47).

15. Steuerverfahren nach Anspruch 14, **gekennzeichnet** durch die folgenden Schritte:
- Prüfen, ob die veränderte Übersetzung (uesoll2) größer als ein Grenzwert (uesoll1' - d_ue_min) ist (48) und
- wenn ja, Abgeben eines Schaltanforderungssignal (shr) "Hochschalten".

16. Steuerverfahren nach Anspruch 14, **gekennzeichnet** durch die folgenden Schritte:
- Prüfen, ob in der nächstniedrigeren Übersetzung (uesoll1(5)) ein Betrieb der Brennkraftmaschine (4) bei der aktuell vorliegenden Drosselklappenstellung (alpha(t) und Motordrehzahl (nmot(t)) unter Zugkraftüberschuß möglich ist und
- wenn ja, Abgeben eines Schaltanforderungssignal shr "Hochschalten".

17. Steuerverfahren nach Anspruch 12 oder 13, **gekennzeichnet** durch folgenden Schritt für das Anpassen der ausgewählten Übersetzung (uesoll1(i)):
- Einstellen einer veränderten nächsthöheren Übersetzung (uesoll2) so, daß dort ein Betrieb der Brennkraftmaschine (4) über ein vorgegebenes Drehzahlband (nmot(t)) möglich ist.

18. Steuerverfahren nach Anspruch 12 oder 13, **gekennzeichnet** durch folgenden Schritt für das Einstellen einer veränderten nächsthöheren Übersetzung (uesoll2):
- Einstellen einer veränderten nächsthöheren Übersetzung (uesoll2) so, daß dort ein Betrieb der Brennkraftmaschine über ein vorgegebenes Drehzahlband und unter Zugkraftüberschuß möglich ist.

19. Steuerverfahren nach Anspruch 12, **gekennzeichnet** durch folgende Schritte für das Erkennen einer Fahrsituation, in der der Übersetzungssprung für einen herrschenden Fahrwiderstand zu groß ist:
- Prüfen, ob in einer nächstniedrigeren voreingestellten Übersetzung (uesoll1(5)) bei der aktuell vorliegenden Drosselklappenstellung (alpha(t) und Motordrehzahl (nmot(t)) Zugkraftüberschuß herrscht und
- wenn ja, dann weiter mit dem Anpassen der ausgewählten Übersetzung.

20. Steuerverfahren nach Anspruch 12 oder 19, **gekennzeichnet** durch durch folgenden Schritt für das Anpassen der ausgewählten Übersetzung (uesoll1(4)):
- Prüfen, ob in der nächstniedrigeren voreingestellten Übersetzung (uesoll1(5)) bei der aktuell vorliegenden Drosselklappenstellung (alpha(t) und Motordrehzahl (nmot(t)) Zugkraftüberschuß herrscht, und solange die Prüfung nein ergibt,
- Unterdrücken eines Wechsels zur nächstniedrigeren voreingestellten Übersetzung (uesoll1(5)) und
- Einstellen einer veränderten Übersetzung (uesoll2) so, daß eine Getriebeeingangsdrehzahl (ne(t)) konstant bleibt, wenn eine Motordrehzahl (nmot(t)) größer als ein Grenzwert (nmax - d_nmot_min) ist.

21. Steuerverfahren nach Anspruch 12 oder 19, **gekennzeichnet** durch durch folgenden Schritt für das Anpassen der ausgewählten Übersetzung (uesoll1(4)):
- Einstellen einer veränderten nächstniedrigeren Übersetzung (uesoll2) so, daß dort bei der aktuell vorliegenden Drosselklappenstellung (alpha(t) und Motordrehzahl (nmot(t)) Zugkraftüberschuß herrscht.

22. Steuerverfahren einem der Ansprüche 12 bis 21, **dadurch gekennzeichnet**, daß das Steuerverfahren zu jedem Zeitpunkt nach dem Abwarten des Schaltanforderungssignales (shr) "Rückschalten" (42) beendet wird, wenn ein weiteres Schaltanforderungssignal (shr) erkannt wird.

## Claims

1. A control device (6) for a continuously variable transmission (2) of a motor vehicle driven, more particularly, by an internal combustion engine (4), the control device (6) being provided with a selector device (18) and the control device (6) simulating a multi-stepped transmission by the control device (6) setting gear ratios (uesoll1(i)) in the transmission selected from a group of preset gear ratios (uesoll1(1..5)), characterised in that the control device
- has a recognition device (40) for driving situations in which the gear ratio step is too great for a prevailing rolling resistance, and
- has an adapting device (41) for the selected gear ratio (uesoll1(i)) or an adjacent gear ratio (uesoll1(i+1)) which changes a selected gear ratio so that the traction is adapted to the prevailing rolling resistance and
- the recognition device (40) activates the adapting device (41).

2. A control device according to claim 1, characterised in that the recognition device (40) responds if, before a change from a preset gear ratio (uesoll1(5)) to a next-higher preset gear ratio (uesoll1(4)), a throttle position (alpha(t)) is greater than a limit value (g_alpha) and longitudinal acceleration (al(t)) is less than zero.

3. A control device according to claim 1 or 2, characterised in that the adapting device (41) sets a changed gear ratio (uesoll2) so that transmission input revs (ne(t)) remain constant when the engine revs (nmot(t)) are greater than a limit value (nmax - d_nmot_min).

4. A control device according to claim 3, characterised in that an automatic change to the next-lower preset gear ratio (uesoll1(5)) takes place as soon as a drop occurs below a predetermined rev difference (d_nmot_min) relative to the engine revs (nmot(t)) in the next-lower preset gear ratio (uesoll1(5)).

5. A control device according to claim 3, characterised in that an automatic change to the next-lower preset gear ratio (uesoll1(5)) takes place as soon as there is excess traction therein with the currently prevailing throttle position (alpha(t)) and engine revs (nmot(t)).

6. A control device according to claim 1 or 2, characterised in that the adapting device (41) replaces the next-higher preset gear ratio (uesoll1(4)), to be set in a change from a preset gear ratio (uesoll1(5)) to a next-higher preset gear ratio (uesoll1(4)), with a changed gear ratio (uesoll2) which is selected so that operation of the internal combustion engine (4) is possible over a predetermined engine rev band (nmot(t)).

7. A control device according to claim 6, characterised in that the changed gear ratio (uesoll2) is selected so that operation of the internal combustion engine (4) is possible over a predetermined engine rev band (nmot(t)) under excess traction.

8. A control device according to claim 1, characterised in that the recognition device (40) responds if there is no excess traction in the next-lower preset gear ratio (uesoll1(5)) with the currently prevailing throttle position (alpha(t)) and engine revs (nmot(t)).

9. A control device according to claim 1 or 8, characterised in that the adapting device (41) suppresses a change to the next-lower preset gear ratio (uesoll1(5)) until there is excess traction therein with the currently prevailing throttle position (alpha(t)) and engine revs (nmot(t)), and during the suppression of this change sets a changed gear ratio (uesoll2) so that transmission input revs (ne(t)) remain constant when engine revs (nmot(t)) are greater than a limit value (nmax - d_nmot_min).

10. A control device according to claim 1 or 8, characterised in that the adapting device (41) replaces the next-lower preset gear ratio (uesoll1(5)) with a changed gear ratio (uesoll2) which is selected so that there is excess traction therein with the currently prevailing throttle position (alpha(t)) and engine revs (nmot(t)).

11. A control device according to one of the preceding claims, characterised in that, after its deactivation, the adapting device (41) holds the last changed gear ratio set (uesoll2) until the next gear-change, whereupon, in a gear-change back down, the originally set gear ratio (uesoll1(i)) is set again.

12. A control method for a continuously variable transmission (2) of a motor vehicle driven, more particularly, by an internal combustion engine (4), a control device (6) executing the control method being provided with a selector device (18) and the control device (6) simulating a multi-stepped transmission by the control device (6) setting gear ratios (uesoll1(i)) in the transmission selected from a group of preset gear ratios (uesoll1(1..5)), characterised by the following steps:
- recognition of a driving situation (45-47) in which the gear ratio step is too great for a prevailing rolling resistance, and subsequently
- adaptation of a selected gear ratio (uesoll1(4)) so that the traction in this selected gear ratio or the one next to it (uesoll1(4)) or uesoll1(5)) corresponds to the prevailing rolling resistance.

13. A control method according to claim 12, characterised by the following steps for the recognition of a driving situation in which the gear ratio step is too great for a prevailing rolling resistance:
- waiting for a gear change requirement signal (shr) "change back down" (42),
- ascertaining the throttle position alpha(t) and the longitudinal acceleration al(t) immediately before the change back down (43,44),
- checking whether both the longitudinal acceleration (al(t)) is less than zero and the throttle position (alpha(t)) is greater than a limit value (g_alpha) (45),
- if yes, then adapting the selected gear ratio.

14. A control method according to one of claims 12 or 13, characterised by the following step for adapting the selected gear ratio (uesoll(4)):
- waiting until the engine revs (nmot(t)) exceed a limit value (nmax - d_nmot_min) and then
- setting a changed gear ratio (uesoll2) so that the transmission input revs (ne(t)) are held constant (47).

15. A control method according to claim 14, characterised by the following steps:
- checking whether the changed gear ratio (uesoll2) is greater than a limit value (uesoll1' - d_ue_min) (48) and
- if yes, issuing of a gear change requirement signal (shr) "change up".

16. A control method according to claim 14, characterised by the following steps:
- checking whether in the next-lower gear ratio (uesoll1(5)) operation of the internal combustion engine (4) is possible with the currently prevailing throttle position (alpha(t)) and engine revs (nmot(t)) under excess traction and
- if yes, issuing of a gear change requirement signal shr "change up".

17. A control method according to claim 12 or 13, characterised by the following step for adapting the selected gear ratio (uesoll1(i)):
- setting of a changed next-higher gear ratio (uesoll2) so that operation of the internal combustion engine (4) is possible therein over a predetermined rev band (nmot(t)).

18. A control method according to claim 12 or 13, characterised by the following step for setting a changed next-higher gear ratio (uesoll2):
- setting of a changed next-higher gear ratio (uesoll2) so that operation of the internal combustion engine is possible therein over a predetermined rev band and under excess traction.

19. A control method according to claim 12, characterised by the following steps for recognizing a driving situation in which the gear ratio step is too great for a prevailing rolling resistance:
- checking whether in a next-lower preset gear ratio (uesoll1(5)) there is excess traction with the currently prevailing throttle position (alpha(t)) and engine revs (nmot(t)) and
- if yes, then adapting the selected gear ratio.

20. A control method according to claim 12 or 19, characterised by the following step for adapting the selected gear ratio (uesoll1(4)):
- checking whether in the next-lower preset gear ratio (uesoll1(5)) there is excess traction with the currently prevailing throttle position (alpha(t)) and engine revs (nmot(t)), and as long as the result of the check is no, - suppression of a change to the next-lower preset gear ratio (uesoll1(5)) and
- setting of a changed gear ratio (uesoll2) so that transmission input revs (ne(t)) remain constant if the engine revs (nmot(t)) are greater than a limit value (nmax - d_nmot_min).

21. A control method according to claim 12 or 19, characterised by the following step for adapting the selected gear ratio (uesoll1(4)):
- setting of a changed next-lower gear ratio (uesoll2) so that there is excess traction therein with the currently prevailing throttle position (alpha(t)) and engine revs (nmot(t)).

22. A control method according to one of claims 12 to 21, characterised in that the control method is terminated at any point in time after awaiting the gear change requirement signal (shr) "change back down" (42) if a further gear change requirement signal (shr) is recognized.

## Revendications

1. Dispositif de commande (6) d'une transmission continue (2) d'un véhicule automobile entraîné notamment au moyen d'un moteur à combustion interne (4), le dispositif de commande (6) étant pourvu d'un dispositif de sélection (18) et le dispositif de commande (6) simulant une transmission à rapport fixes, en ce que le dispositif de commande (6) règle, à partir d'un groupe de rapports préréglés (uesoll1 (1...5)), des rapports sélectionnés (uesoll1(i)) dans la transmission, caractérisé en ce que le dispositif de commande
- comporte un dispositif de reconnaissance (40) de situations de marche dans lesquelles le saut de rapport est trop grand pour la résistance à la marche existante et
- un dispositif d'adaptation (41) pour le rapport sélectionné (uesoll1(i)) ou un rapport voisin (uesoll1(i+1)), qui modifie un rapport sélectionné de manière que la force de traction est adaptée à la résistance à la marche existante et
- le dispositif de reconnaissance (40) active le dispositif d'adaptation (41).

2. Dispositif de commande selon la revendication 1, caractérisé en ce que le dispositif de reconnaissance (40) réagit lorsque avant le passage d'un rapport préréglé (uesoll1(5)) à un rapport préréglé (uesoll1(4)) immédiatement supérieur, une position du papillon des gaz (alpha(t)) est supérieure à une valeur limite (g_alpha) et une accélération longitudinale (al(t)) est inférieure à zéro.

3. Dispositif de commande selon la revendication 1 ou 2, caractérisé en ce que le dispositif d'adaptation (41) règle un rapport modifié (uesoll2), de manière qu'une vitesse de rotation d'entrée de la transmission (ne(t)) reste constante lorsqu'une vitesse de rotation du moteur (nmot(t)) est supérieure à une valeur limite (nmax-d_nmot_min).

4. Dispositif de commande selon la revendication 3, caractérisé en ce qu'un changement automatique, vers le rapport préréglé immédiatement inférieur (uesoll1(5)) s'effectue dès qu'une différence de rotation donnée (d_nmot_min) par rapport à la vitesse de rotation du moteur (nmot(t)) n'est pas atteinte dans le rapport préréglé immédiatement inférieur (uesoll1(5)).

5. Dispositif de commande selon la revendication 3, caractérisé en ce qu'un changement automatique dans le rapport préréglé immédiatement inférieur (uesoll1(5)) s'effectue dès qu'y règne un excédent de force de traction pour la position actuelle du papillon des gaz (alpha(t)) et pour la vitesse de rotation du moteur (nmot(t)).

6. Dispositif de commande selon la revendication 1 ou 2, caractérisé en ce que le dispositif d'adaptation (41) remplace, lors du passage d'un rapport préréglé (uesoll1(5)) à un rapport préréglé immédiatement supérieur (uesoll1(4)), le rapport préréglé immédiatement supérieur (uesoll1(4)) à régler par un rapport modifié (uesoll2) qui est sélectionné de manière à rendre possible un fonctionnement du moteur à combustion interne (4) sur une bande de vitesses de rotation du moteur (nmot(t)) donnée.

7. Dispositif de commande selon la revendication 6, caractérisé en ce que le rapport modifié (uesoll2) est sélectionné de manière à rendre possible un fonctionnement du moteur à combustion interne (4) sur une bande de vitesses de rotation du moteur (nmot(t)) donnée, avec force de traction excédentaire.

8. Dispositif de commande selon la revendication 1, caractérisé en ce que le dispositif de reconnaissance (40) réagit lorsque aucun excédent de force de traction ne règne dans le rapport préréglé immédiatement inférieur (uesoll1(5)) pour la position du papillon des gaz (alpha(t)) et la vitesse de rotation du moteur (nmot(t)) actuelle.

9. Dispositif de commande selon la revendication 1 ou 8, caractérisé en ce que le dispositif d'adaptation (41) supprime un passage au rapport préréglé immédiatement inférieur (uesoll1(5)), jusqu'à ce qu'y règne un excédent de force de traction pour la position du papillon des gaz (alpha(t)) et la vitesse de rotation du moteur (nmot(t)) actuelles, et en ce que pendant la suppression de ce passage le dispositif d'adaptation règle un rapport modifié (uesoll2) de manière qu'une vitesse de rotation d'entrée de la transmission (ne(t)) reste constante si une vitesse de rotation du moteur (nmot(t)) est supérieure à une vitesse limite (nmax-d_nmot_min).

10. Dispositif de commande selon la revendication 1 ou 8, caractérisé en ce que le dispositif d'adaptation (41) remplace le rapport préréglé immédiatement inférieur (uesoll1(5)) par un rapport modifié (uesoll2) qui est sélectionné de manière qu'y règne un excédent de force de traction pour la position du papillon des gaz (alpha(t)) et la vitesse de rotation du moteur (nmot(t)) actuelles.

11. Dispositif de commande selon l'une des revendications précédentes, caractérisé en ce que le dispositif d'adaptation (41) conserve, après sa désactivation, le dernier rapport modifié (uesoll2) réglé, jusqu'à la commande suivante, le rapport initialement réglé (uesoll1(i)) étant rétabli en cas de rétrogradation.

12. Procédé de commande d'une transmission continue (2) d'un véhicule automobile entraîné notamment au moyen d'un moteur à combustion interne (4), un dispositif de commande (6) exécutant le procédé de commande étant pourvu d'un dispositif de sélection (18) et le dispositif de commande (6) simulant une transmission à rapports fixes, en ce que le dispositif de commande (6) règle, à partir d'un groupe de rapports préréglés (uesoll1 (1...5)), des rapports sélectionnés (uesoll1(i)) dans la transmission, caractérisé par les étapes suivantes:
- reconnaissance d'une situation de marche (45 à 47) dans laquelle le saut de rapport est trop grand pour une résistance à la marche existante et ensuite
- adaptation d'un rapport sélectionné (uesoll1(4)) de manière que la force de traction corresponde dans ce rapport sélectionné ou le rapport voisin à celui-ci (uesoll1(4)) ou (uesoll1(5)), à la résistance à la marche existante.

13. Procédé de commande selon la revendication 12, caractérisé par les étapes suivantes pour la reconnaissance d'une situation de marche dans laquelle le saut de rapport pour une résistance à la marche existante est trop grand:
- attente d'un signal d'invitation à la manoeuvre (shr) « rétrograder » (42),
- détermination de la position du papillon des gaz (alpha(t)) et de l'accélération longitudinale (al(t)) directement avant la rétrogradation (43, 44),
- vérification que l'accélération longitudinal (al(t)) est inférieure à zéro et que la position du papillon des gaz (alpha(t)) est supérieure à une valeur limite (g_alpha) (45),
- si oui, adaptation du rapport sélectionné.

14. Procédé de commande selon l'une des revendications 12 ou 13, caractérisé par l'étape suivante pour l'adaptation du rapport sélectionné (uesoll1(4)):
- attendre que la vitesse de rotation du moteur (nmot(t)) dépasse une valeur limite (nmax-d_nmot_min) (46) et ensuite
- régler un rapport modifié (uesoll2) tel que la vitesse de rotation d'entrée de la transmission (ne(t)) soit maintenue constante (47).

15. Procédé de commande selon la revendication 14, caractérisé par les étapes suivantes:
- vérifier que le rapport modifié (uesoll2) est supérieur à une valeur limite (uesoll1'-d_ue_min) (48) et
- si oui, délivrer un signal d'invitation à la manoeuvre (shr) « passer au rapport supérieur ».

16. Procédé de commande selon la revendication 14, caractérisé par les étapes suivantes:
- vérifier si dans le rapport immédiatement inférieur (uesoll1(5)) un fonctionnement du moteur à combustion interne (4) est possible avec excédent de force de traction, pour la position du papillon des gaz (alpha(t)) et la vitesse de rotation du moteur (nmot(t)) actuelles et
- si oui, délivrer un signal d'invitation à la manoeuvre (shr) « passer au rapport supérieur ».

17. Procédé de commande selon la revendication 12, caractérisé par l'étape suivante pour l'adaptation du rapport sélectionné (uesoll1(i)):
- régler un rapport modifié immédiatement supérieur (uesoll2) de manière qu'un fonctionnement du moteur à combustion interne (4) y soit possible sur une bande de vitesses de rotation du moteur donnée (nmot(t)).

18. Procédé de commande selon la revendication 12 ou 13, caractérisé par l'étape suivante pour le réglage d'un rapport modifié immédiatement supérieur (uesoll2):
- régler un rapport modifié immédiatement supérieur (uesoll2) de manière qu'un fonctionnement du moteur à combustion interne (4) y soit possible sur une bande de vitesses de rotation du moteur donnée (nmot(t)) et avec excédent de force de traction.

19. Procédé de commande selon la revendication 12, caractérisé par les étapes suivantes pour la reconnaissance d'une situation de marche dans laquelle le saut de rapport est trop grand pour une résistance à la marche existante:
- vérifier si dans un rapport préréglé immédiatement inférieur (uesoll1(5)) un excédent de force de traction règne pour la position du papillon des gaz (alpha(t)) et la vitesse de rotation du moteur (nmot(t)) actuelles, et
- si oui, adapter le rapport sélectionné.

20. Procédé de commande selon la revendication 12 ou 19, caractérisé par l'étape suivante pour l'adaptation du rapport sélectionné (uesoll1(4)):
- vérifier si dans le rapport préréglé immédiatement inférieur (uesoll1(5)) règne un excédent de force de traction pour la position du papillon des gaz (alpha(t)) et la vitesse de rotation du moteur (nmot(t)) actuelles, et si la réponse à la vérification est négative :
- supprimer un passage au rapport préréglé immédiatement supérieur (uesoll1(5)) et
- régler un rapport modifié (uesoll2) de manière qu'une vitesse de rotation d'entrée de la transmission (ne(t)) reste constante, lorsqu'une vitesse de rotation du moteur (nmot(t)) est supérieure à une valeur limite (nmax-d_nmot_min).

21. Procédé de commande selon la revendication 12 ou 19, caractérisé par l'étape suivante pour l'adaptation du rapport sélectionné (uesoll1(4)):
- régler un rapport modifié immédiatement inférieur (uesoll1(2)) de manière qu'y règne un excédent de force de traction pour la position du papillon des gaz (alpha(t)) et la vitesse de rotation du moteur (nmot(t)) actuelles.

22. Procédé de commande selon l'une des revendications 12 à 21, caractérisé en ce que le procédé de commande est terminé à tout instant après attente du signal d'invitation à la manoeuvre (shr) « rétrograder » (42), si un autre signal d'invitation à la commande (shr) est reconnu.
